# EUROPÄISCHE PATENTSCHRIFT

(11) **EP 1 876 005 B1**
(45) Veröffentlichungstag und Bekanntmachung des Hinweises auf die Patenterteilung: **29.04.2009**
(21) Anmeldenummer: 06116814.2
(22) Anmeldetag: 07.07.2006
(51) Int. Cl.: B29C 45/26

(54) **Spritzgussform mit Lamellenelementen**
Injection mould with lamellar elements
Moule à moulage par injection avec des éléments de lamelles

(43) Veröffentlichungstag der Anmeldung: 09.01.2008
(73) Patentinhaber: RKT Rodinger Kunststoff-Technik GmbH, 93426 Roding (DE)
(72) Erfinder: Schneider, Werner, 93466 Chamerau (DE)
(74) Vertreter: Szynka, Dirk

(56) Entgegenhaltungen:
- DE-A1- 1 554 925
- DE-A1- 3 542 840
- FR-A1- 2 081 221
- US-A- 3 004 291
- US-A- 3 551 936
- US-A- 5 783 224
- US-A1- 2002 041 053
- US-A1- 2003 163 884
- US-A1- 2004 016 440

## Beschreibung

Die vorliegende Erfindung bezieht sich auf das technische Gebiet des Spritzgießens.

Das Spritzgießen ist als technisches Verfahren zur Formgebung thermoplastischer Materialien seit geraumer Zeit bekannt und in weit verbreitetem Gebrauch. Eine thermoplastische Masse wird so weit erwärmt, dass sie eine ausreichende Fließfähigkeit besitzt, und dann unter Druck, etwa über eine Schnecke gefördert, in eine Spritzgussform eingespritzt. In der Spritzgussform erkaltet das Material und erstarrt damit, so dass es nach dem Öffnen der Spritzgussform als der Form entsprechendes Spritzgussprodukt entnommen werden kann.

In der Regel sind spritzgegossene Teile bei großen Stückzahlen vergleichsweise günstig herzustellen, weil das Spritzgussverfahren an sich relativ einfach und damit auch preiswert durchzuführen ist. Allerdings ist die Herstellung der Spritzgussform vor allem bei komplexeren Teilegeometrien aufwändig und teuer, so dass sie die Kosten vor allem bei begrenzten Stückzahlen deutlich belastet. Die Komplexität der Teilegeometrie betrifft dabei zum einen die geometrische Detailliertheit der Form, zum anderen aber auch den Vorgang des Öffnens der Form zur Entnahme des Spritzgussproduktes, also des Entformens. Hierbei muss mit Rücksicht auf Hinterschnitte und die begrenzte Elastizität der entsprechenden hinterschnittenen Produktteile eine entsprechende Aufteilung der Form vorgenommen werden.

Die DE-OS 1554925 zeigt eine Spritzgussvorrichtung für Zahnbürsten, bei denen Griff und Bürstenkopf angespritzt werden und die Borsten davon separat in endloser Form durch ein Plattensystem zugeführt werden. Dieses Plattensystem zeigt Lamellenetemente in verschachtelter Anordnung.

Die US 3,004,291 zeigt eine Spritzgussvorrichtung für eine komplette Bürste, wobei die Spritzgussform aus einer größerer Zahl paralleler einzelner Platten mit darin eingefrästen oder erodierten Borsten-Negativformen und dazwischen angeordneten planparallelen Platten aufgebaut ist.

Die vorliegende Erfindung hat zur Aufgabe, eine im Hinblick auf anspruchsvolle Teilegeometrien verbesserte Spritzgussform anzugeben, sowie ein entsprechendes Verfahren zum Zusammenbauen der Spritzgussform, zum Spritzgießen selbst und eine entsprechende Spritzgussmaschine anzugeben.

Die Erfindung richtet sich auf eine Spritzgussform, welche mindestens drei zusammengesetzte Teilformeinsätze aufweist, wobei mindestens einer der Teilformeinsätze jeweils einen in einer axialen Richtung laufenden Träger und an dem Träger eine Mehrzahl Lamellenelemente aufweist, die Lamellenelemente dieses Teilformeinsatzes und Lamellenelemente mindestens eines weiteren der Teilformeinsätze bei dem Zusammensetzen der beiden Teilformeinsätze in der axialen Richtung aufeinander folgend angeordnet sind, die Lamellenelemente dabei in solcher zumindest einen Teil einer Negativform für das Spritzgussprodukt Weise bilden, dass feine Strukturen der Negativform aus vor dem Zusammensetzen der Teilformeinsätze getrennten Teilen aufgebaut sind, und die Lamellenelemente dabei in der axialen Richtung in Bezug auf die Zugehörigkeit zu den beiden Teilformeinsätzen alternieren, dadurch gekennzeichnet, dass auch der mindestens eine weitere der Teitformeinsätze einen in der axialen Richtung laufenden Träger und die Mehrzahl Lamellenelemente an dem Träger aufweist, sowie auf eine Spritzgussmaschine mit einer solchen Spritzgussform, auf ein Verfahren zum Zusammenbauen der Spritzgussform und auf ein Verfahren zum Spritzgießen mit dieser Spritzgussform.

Die Grundidee der Erfindung besteht darin, die Spritzgussform nicht nur, wie an sich bekannt, in zumindest drei Teilformeinsätze aufzuteilen, die beim Zusammenbau der Spritzgussform zusammengesetzt werden, sondern zumindest zwei dieser Teilformeinsätze jeweils mit einer Mehrzahl Lamellenelemente auszustatten, die an einem gemeinsamen Träger des Teilformeinsatzes gehalten sind. Die Lamellenelemente sind in zusammengebautem Zustand der Spritzgussform aufeinander folgend angeordnet, wobei die Richtung dieser Folge hier als axiale Richtung bezeichnet wird, ohne dass damit eine Aussage über Symmetrieeigenschaften dieser Achse oder eine besondere Länge der Spritzgussform oder der Teilformeinsätze in Richtung dieser Achse verbunden sein soll. Die axiale Richtung soll lediglich durch die Aufeinanderfolge der Lamellenelemente definiert sein. Des Weiteren sollen die Lamellenelemente in dieser axialen Richtung in Bezug auf ihre jeweilige Zugehörigkeit zu den beiden Teilformeinsätzen alternieren. Es sollen also in der axialen Richtung direkt aufeinander folgende Lamellenelemente zu jeweils unterschiedlichen Teilformeinsätzen gehören.

Wie das Ausführungsbeispiel figürlich verdeutlicht, kann durch die Aufteilung in die Lamellenelemente und deren alternierende Reihenfolge erreicht werden, dass relativ feine Strukturen der auszubildenden Form, also der Negativform für das Spritzgussprodukt, aus bei der Fertigung der Spritzgussform zunächst getrennten Teilen aufgebaut werden, beispielsweise also die in der axialen Richtung vordere und hintere Wand eines bestimmten Teils der Negativform jeweils zu unterschiedlichen Lamellenelementen gehören. Damit müssen die einzelnen feinen Strukturen nicht an sich in ihrer Feinheit aus dem Vollen herausgearbeitet werden, etwa durch Funkenerosion, sondern können durch Bearbeitung einer Oberfläche vertiefend eingebracht werden. Wenn entsprechend vertiefend bearbeitete Oberflächen dann beim Zusammenbau der Teilformeinsätze aneinander gelegt werden, können zwischen den vertieften Oberflächenteilen sehr feine Strukturen eingeschlossen sein.

Andererseits würde alleine eine Aufteilung in Lamellenelemente, die dann getrennt zu handhaben wären, eine erhebliche Verkomplizierung beim Zusammenbau der Spritzgussform mit sich bringen. Erfindungsgemäß werden stattdessen die Lamellenelemente jeweils gruppenweise einem Träger zugeordnet, so dass ein Träger gemeinsam mit den an ihm gehaltenen Lamellenelementen einen von im Verhältnis zu der Zahl der Lamellenelemente insgesamt deutlich weniger Teilformeinsätzen bildet. Beim Zusammensetzen und Auseinanderbauen der Spritzgussform, bei der Wartung und auch bereits bei der Herstellung müssen damit deutlich weniger getrennte Teile gehandhabt und manipuliert werden.

Man kann sich die Erfindung damit quasi so veranschaulichen, dass die Lamellenelemente in der Art von Kammzinken ineinander greifen, wenn die Teilformeinsätze zusammengesetzt werden, und die Träger gewissermaßen dem Kammrücken entsprechen. Es ist dabei nicht unbedingt notwendig, jedoch bevorzugt, dass die Lamellenelemente hinsichtlich ihrer jeweiligen Zugehörigkeit zu den Teilformeinsätzen bzw. Trägern periodisch alternieren. Die Reihenfolge kann sich also ändern. Es ist auch nicht unbedingt notwendig, dass nächstbenachbarte Lamellenelemente immer und ausnahmslos zu verschiedenen Teilformeinsätzen gehören. Vielmehr kann es hierbei auch Ausnahmen geben, etwa wenn entsprechende Hohlräume zwischen zwei Lamellenelementen eines Teilformeinsatzes durch diese und den benachbarten Träger begrenzt werden können, ohne dass dabei besonders feine Strukturen berücksichtigt werden müssten.

Entlang der gesamten Spritzgussform können dabei natürlich auch mehr als ein Trägerelement in der axialen Richtung auftauchen, also eine Mehrzahl Teilformeinsätze auch in axialer Richtung hintereinander gesetzt werden. Im Übrigen liegen in den Dimensionen quer zu der axialen Richtung erfindungsgemäß zumindest drei, jedoch in den allermeisten Fällen mehr als drei Teilformeinsätze "nebeneinander" vor. Zumindest zwei der Teilformeinsätze weisen dabei erfindungsgemäße Lamellenelemente auf, bei vier oder mehr Teilformeinsätzen sind jedoch vorzugsweise auch mehr als zwei Teilformeinsätze mit Lamellenelementen versehen. Insbesondere können die Lamellenelemente jeweils paarweise an den Teilformeinsätzen vorgesehen sein, etwa an vier Teilformeinsätzen, und in der entsprechenden Paarung im zusammengebauten Zustand aufeinanderfolgend angeordnet sein. Zusätzlich können sogar die Lamellenelemente von mehr als zwei Teilformeinsätzen im zusammengebauten Zustand der Spritzgussform aufeinanderfolgend angeordnet sein. Die Lamellenelemente der Teilformeinsätze müssen aber dabei nicht sämtlich miteinander verschachtelt sein, sondern können beispielsweise auch paarweise oder in anderen Gruppenzuordnungen und auch nur für ein Paar oder eine Gruppe von Teilformeinsätzen miteinander verschachtelt sein. Die Erfindung betrifft ferner ganz ausdrücklich auch Spritzgussformen, bei denen nur ein Teil der vorhandenen Teilformeinsätze erfindungsgemäß verschachtelte Lamellenelemente aufweisen.

Die Erfindung eignet sich nicht nur, aber besonders gut für repetitive Strukturen der Negativform bzw. des Spritzgussprodukts, so dass es bevorzugt ist, dass die Lamellenelemente eines Teilformeinsatzes untereinander zumindest zu einem wesentlichen Teil, etwa zumindest zur Hälfte, formidentisch sind. Zur Veranschaulichung wird auf das Ausführungsbeispiel verwiesen. Repetitive Strukturen können auch dann vorliegen, wenn sich die Lamellenelemente entlang der axialen Richtung nur deutlich ähneln, jedoch nicht wirklich identisch sind, etwa bei Strukturen mit "geschwungener Silhouette" aus sich im Übrigen praktisch identisch ähnelnden einzelnen Elementen.

Eine bevorzugte und besonders einfache Ausgestaltung der Erfindung sieht vor, dass Lamellenelemente der beiden oder jeweils zweier Teilformeinsätze untereinander alternieren, also zweifach alternieren. Dies schließt nicht aus, dass es, insbesondere quer zur Achse, nicht auch weitere Teilformeinsätze mit weiteren Lamellenelementen gibt, die jedoch nicht an der alternierenden Reihenfolge der eben beschriebenen Lamellenelemente der beiden Teilformeinsätze teilhaben. Zur Veranschaulichung wird wiederum auf das Ausführungsbeispiel verwiesen.

Ferner ist vorzugsweise vorgesehen, dass sich jeweils nächstbenachbarte Lamellenelemente (paarweise) flächig berühren, also über einen Teil ihrer Fläche, mit der sie einander zugewandt sind, in einen Kontakt miteinander kommen, der in diesem Teil einen Anteil der Negativform für das Spritzgussprodukt definiert. In den verbleibenden Teil der Flächen sind sie entsprechend vertieft und definieren damit einen Anteil der Negativform.

Besonders bevorzugt ist, dass zumindest ein Teil der verschachtelten Anordnungen der Lamellenelemente im Betrieb der Spritzgussform erhalten bleibt, also die beiden Teilformeinsätze mit den Lamellenelementen oder jeweils Paare solcher Teilformeinsätze in relativer Ruhelage zueinander verbleiben, wenn ein Entformvorgang erfolgt, also Spritzgussformteile voneinander getrennt werden, um nach einem Spritzgussvorgang ein Spritzgusserzeugnis zu entnehmen. Hier hat also die erfindungsgemäße Aufteilung in Teilformeinsätze und Lamellenelemente den Sinn der einfacheren Herstellung und des einfacheren Zusammenbaus von Spritzgussformteilen und nichts mit den Trennvorgängen beim Entformen zu tun. Beispielsweise kann eine Spritzgussform zwei Spritzgussformhälften aufweisen, die jeweils aus einem Teilformeinsatzpaar bestehen, oder kann sie Spritzgussformviertel aus jeweils einem Paar Teilformeinsätzen aufweisen. Es können auch Ausführungsformen der Erfindung von Vorteil sein, bei denen beim Entformen einige Lamellenelemente voneinander getrennt werden, und andere in Ruhelage zueinander verbleiben, die erfindungsgemäße Aufteilung in Lamellenelemente also teils den während der Entformvorgänge stationären Aufbau von Spritzgussformteilen betrifft und teils aber auch die geometrische Struktur der beim Schließen der Spritzgussform ineinandergreifenden und beim Entformen voneinander getrennten Spritzgussformteile im Sinn dieses Ineinandergreifens und Getrenntwerdens betreffen.

Im allgemeinsten Sinn der Erfindung sind zumindest zwei Teilformeinsätze mit jeweiligen Lamellenelementen vorgesehen (die beim Entformen vorzugsweise verbunden bleiben) sowie ein dritter Teilformeinsatz, der keine Lamellenelemente aufweisen muss und beim Entformen von den beiden anderen Teilformeinsätzen getrennt wird.

Ferner sind die Lamellenelemente vorzugsweise einstückig mit den jeweiligen Trägern ausgebildet, also jeweils in einem Block mit den Trägern hergestellt. Alternativ, aber weniger bevorzugt, ist auch eine schichtweise, etwa lamellenelementweise Herstellung und nachträgliche Verbindung in der axialen Richtung möglich.

Die Erfindung eignet sich besonders zum Spritzgießen von Produkten, die eine insoweit komplexe Form aufweisen, als sie eine für die Aufnahme oder das Anhaften von Substanzen ausgestaltete Oberfläche bilden. Die Erfindung richtet sich damit u.a. bevorzugt auf die Herstellung von Applikatoren unterschiedlichster Art, also Formen mit relativ komplexer und im Vergleich zur Größe des Applikators großer Oberfläche, die durch Anhaften von flüssigen, streichfähigen oder feinpartikelförmigen Materialien diese aufnehmen und auf eine bestimmte Stelle oder Oberfläche auftragen können. Dabei kann es sich im engeren Sinne um Bürsten handeln, also Gebilde mit einer Vielzahl nebeneinander liegender Borsten, auch in Form von sich verjüngenden oder anderweitig geformten Vorsprüngen oder Noppen. Als Applikatoren kommen auch Strukturen in der geometrischen Art konventioneller Honigapplikatoren in Betracht, also an einem Stiel gehaltene parallele Lamellen oder Scheibchen. Dabei sind die Applikatorenstrukturen im interessantesten Fall deutlich kleiner als von Honigapplikatoren bekannt. Im Übrigen ist hier natürlich von den Applikatorenköpfen die Rede, die mit Griffen oder Stielen versehen sein können, aber nicht müssen.

Wenn es um das Aufnehmen von Substanzen durch Anhaften an einer Oberfläche zum Entfernen von einer bestimmten Stelle oder Oberfläche geht, kann man ebenfalls von Bürsten sprechen oder im Fall verallgemeinerter Geometrien, ähnlich dem beschriebenen Honiglöffel, auch von Bürsten in einem allgemeineren Sinn. Dieser allgemeinere Sinn von "Bürste" soll auch für das oben beschriebene Auftragen gelten.

Eine ganz besonders bevorzugte Ausführungsform der Erfindung ist vorgesehen zur Herstellung sehr kleiner Kunststoffbürstchen oder -applikatoren zum Auftragen von Kosmetikprodukten, insbesondere von Wimperntuschebürstchen. Hierbei treten besonders filigrane und zahlreiche Strukturen auf, weil die Kosmetikbürste insgesamt sehr klein ist, etwa um am Auge sicher gehandhabt werden zu können, und dabei ein sehr feines gebundenes Material aufnehmen können soll.

Weitere bevorzugte Anwendungen liegen bei Filtern und Absorbern für die Abscheidung von Substanzen aus einem fluiden Medium, bei Vibrationsdämpfern, bei Mischern, also Strukturen, die zum Vermischen von Substanzen durch Bewegung darin dienen, bei chemischen Reaktoren usw.

Bei diesen und anderen Anwendungen sind Fälle bevorzugt, bei denen die "Vielschichtigkeit" der herzustellenden Form relativ groß ist, was sich u. a. in einer relativ großen Zahl von Lamellenelementen ausdrückt. Vorzugsweise beträgt die Zahl der Lamellenelemente insgesamt, also unter Einschluss aller beteiligten Teilformeinsätze, zumindest 20, wobei vorzugsweise zumindest 10 auf jeden Teilformeinsatz entfallen. Die Erfindung ist jedoch auch vorteilhaft und sinnvoll ausführbar, wenn die Zahl der Lamellenelemente deutlich kleiner ist, etwa nur zwischen 3 und 10 pro Trägerbalken.

Die Erfindung erlaubt damit eine relativ einfache und effiziente Konstruktion der Spritzgussform, was sich sowohl in deren Vorrichtungseigenschaften als auch in ihrer Herstellung ausdrückt. Schließlich verbessern sich damit auch die Spritzgussmaschine und das Spritzgussverfahren, weil deren Leistungsfähigkeit maßgeblich von den Eigenschaften der Spritzgussform mit bestimmt wird.

Im Folgenden wird ein Ausführungsbeispiel für die Erfindung anhand der Figuren näher erläutert, wobei die einzelnen Merkmale auch in anderen Kombinationen erfindungswesentlich sein können und sich die Offenbarung, wie auch die vorstehende Beschreibung, implizit auf alle Vorrichtungs- und Verfahrenskategorien der Erfindung bezieht.
- Figur 1: zeigt eine perspektivische Ansicht eines Teils einer erfindungsgemäßen Spritzgussform in Gestalt zweier Ausschnitte aus Teilformeinsätzen mit Lamellenelementen in getrenntem Zustand zusammen mit einem entsprechenden Teil eines zugehörigen Spritzgussprodukts.
- Figur 2: zeigt die Ausschnitte aus den Teilformeinsätzen aus Figur 1 zusammen mit dem Teil des Spritzgussprodukts in zusammengefügtem Zustand, und zwar wiederum in perspektivischer Ansicht.
- Figur 3: zeigt eine Draufsicht und drei Seitenansichten zu Figur 2.

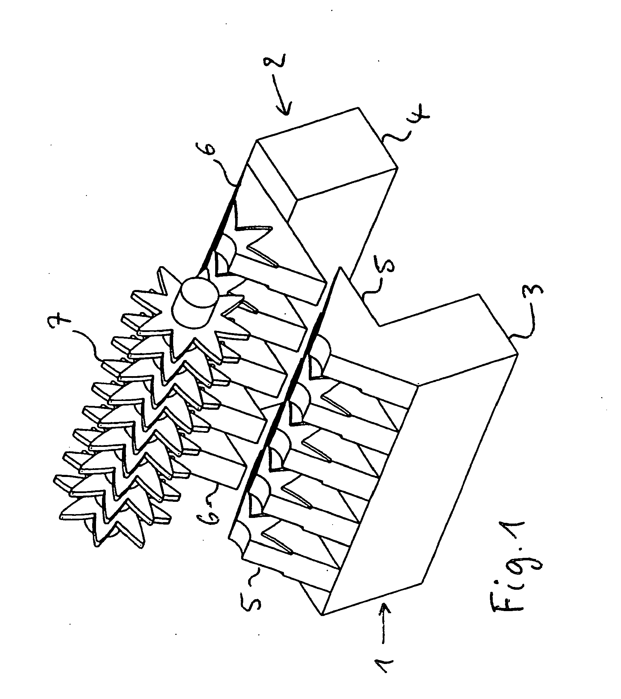

In Figur 1 erkennt man zwei Teilformeinsätze 1 und 2, die jeweilige Träger 3 und 4 in Form im Wesentlichen quaderförmiger Balken aufweisen. An den quaderförmigen Trägern 3 und 4 sind jeweils Lamellenelemente 5 bzw. 6 angebracht, die im vorliegenden Fall einstückig mit den Trägern 3 und 4 verbunden sind. Sie könnten natürlich im Rahmen der Erfindung auch durchaus separat gefertigt und nachträglich an dem Träger angebracht worden sein. Die Grundgeometrie der Lamellenelemente 5 und 6 ist die eines rechtwinkligen Dreiecks, wobei die dem rechten Winkel zugeordnete Spitze jeweils durch einen Kreisausschnitt mit dem Mittelpunkt in dieser Spitze weg geschnitten ist und die Lamellenelemente 5 und 6 in der axialen Richtung, hier von vorne rechts nach hinten links, eine sozusagen einer Parallelverschiebung des Dreiecks in der axialen Richtung entsprechende Grundform haben.

Die Figuren zeigen ferner, dass zwischen den jeweils einander zugewandten Seiten der Lamellenelemente 5 und 6 von der weggeschnittenen Spitze (am rechten Winkel des rechtwinkligen Dreiecks) ein Teil einer Sternform ausgeht, mit der die dreieckigen Seitenflächen vertieft sind. Dabei ist das vordere Lamellenelement 5 des linken Teilformeinsatzes 3 mit seiner nach vorne weisenden Seitenfläche ausgenommen.

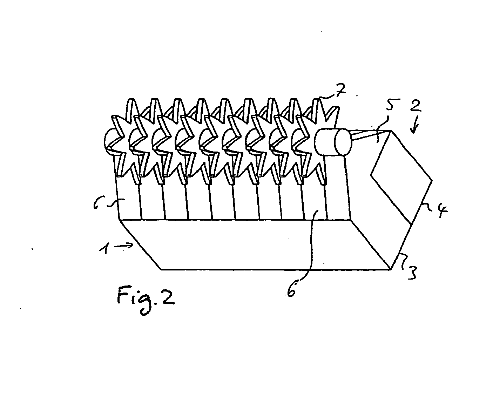

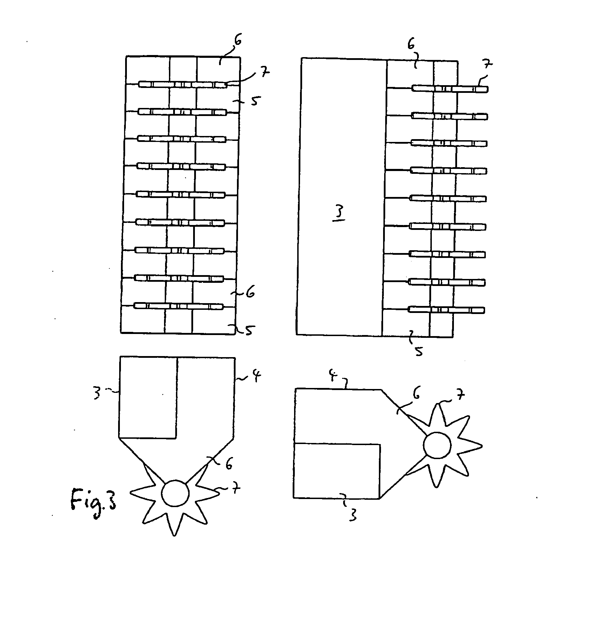

Die Teilformeinsätze 1 und 2 können, wie Figur 1 zeigt, einfach zusammengeschoben werden, wobei sich die Lamellenelemente 5 und 6 kammzinkenartig verschachteln und eine Struktur wie in Figur 2 und Figur 3 entsteht. Dabei liegen auch die Träger 3 und 4 aneinander an. Die sternförmigen Ausschnitte bilden dabei relativ feine Hohlformen für das in Figur 1 über den Teilformeinsätzen 1 und 2 separat und in den Figuren 2 und 3 in der Negativform eingesetzt gezeichnete Spritzformprodukt 7. Bei diesem Spritzformprodukt handelt es sich um einen Teil einer Wimperntuschebürste mit sich nach außen jeweils verjüngenden einzelnen Borsten, die gewissermaßen die Strahlen der Sternform bilden. Drei dieser Borsten sind durch die beiden Teilformeinsätze 3 und 4 mit erfasst, und zwar die drei unteren, wobei dies für die äußeren dieser drei nur jeweils zur Hälfte gilt. Denkt man sich in Figur 2 weitere drei Teilformeinsatzpaare jeweils um 90° um die durch die Mittenachse der Wimperntuschebürste 7 definierte Achse gedreht hinzu, ergibt sich eine vollständige Negativform für die Wimperntuschebürste 7. Die kreisförmigen Ausschnitte an den Eckpunkten des Dreiecks beim rechten Winkel entsprechen dabei dem axial und mittig liegenden Zylinder der Wimperntuschebürste 7.

Man erkennt, dass die Teilformeinsätze 1 und 2 und auch die übrigen drei Teilformeinsatzpaare beim Entformen, also beim Herausnehmen der Wimperntuschebürste 7, jeweils paarweise zusammengesetzt bleiben. Die Teilformeinsätze der Paare werden also nur bei der Montage der Spritzgussform paarweise zusammengebaut und im Betrieb zusammengelassen. Beim Entformen können alternativ zwei Teilformeinsatzpaare einerseits, also eine Spritzgussformhälfte, und zwei weitere Teilformeinsatzpaare andererseits, also eine weitere Spritzgussformhälfte, voneinander getrennt werden, oder auch Spritzgussformviertel aus jeweils einem Teilformeinsatzpaar voneinander getrennt werden, wenn dies den Entformvorgang vereinfacht.

Man erkennt ferner deutlich, dass sich die annähernd dreieckförmigen Seitenflächen der Lamellenelemente 5 und 6 durch Vertiefung bearbeiten lassen, ohne dass dabei die der Stärke der Sternformen der fertigen Wimperntuschebürste 7 (in axialer Richtung) entsprechende Feinheit der Abmessungen in vollem Umfang als Problem zum Tragen kommt. Die Negativformen für diese Sterne müssen nämlich nicht aus dem Vollen heraus gearbeitet werden, sondern können, dadurch dass jeweils das zwischen zwei Lamellenelementen 5 zwischenliegende Lamellenelement 6 des anderen Teilformeinsatzes fehlt (oder umgekehrt), sehr viel einfacher erzeugt werden. Man erkennt ferner, dass hier die Lamellenelemente im Bereich des dargestellten Ausschnitts aus der gesamten Wimperntuschebürste, die etwa dreißig bis vierzig statt der hier dargestellten neun sich wiederholenden Sternstrukturen aufweist, untereinander identisch sind. Dies gilt mit Ausnahme der sichtbaren Frontfläche des vordersten Lamellenelementes 5 des Teilformeinsatzes 1 und der rückwärtigen Frontfläche des hintersten Lamellenelementes 6 des Teilformeinsatzes 2. Ferner alternieren die Lamellenelemente in der axialen Richtung zweifach und insoweit periodisch. Wenn es drei oder mehr an der alternierenden Reihe teilnehmende Teilformeinsätze gäbe, wären ebenfalls periodische Reihenfolgen bevorzugt.

## Patentansprüche

1. Spritzgussform
welche mindestens drei zusammengesetzte Teilformeinsätze (1, 2) aufweist,
wobei mindestens einer der Teilformeinsätze (1, 2) jeweils einen.in einer axialen Richtung laufenden Träger (3, 4) und an dem Träger (3, 4) eine Mehrzahl Lamellenelemente (5, 6) aufweist,
die Lamellenelemente (5, 6) dieses Teilformeinsatzes (1, 2) und Lamellenelemente (6, 5) mindestens eines weiteren der Teilformeinsätze (2, 1) bei dem Zusammensetzen der beiden Teilformeinsätze (1, 2) in der axialen Richtung aufeinander folgend angeordnet sind,
die Lamellenelemente (5, 6) dabei in solcher Weise zumindest einen Teil einer Negativform für das Spritzgussprodukt bilden, dass feine Strukturen der Negativform aus vor dem Zusammensetzen der Teilformeinsätze (1, 2) getrennten Teilen aufgebaut sind,
und die Lamellenelemente (5, 6) dabei in der axialen Richtung in Bezug auf die Zugehörigkeit zu den beiden Teilformeinsätzen (1, 2) alternieren,
**dadurch gekennzeichnet, dass** auch der mindestens eine weitere der Teilformeinsätze (2, 1) einen in der axialen Richtung laufenden Träger (4, 3) und die Mehrzahl Lamellenelemente (6, 5) an dem Träger (4, 3) aufweist.

2. Spritzgussform nach Anspruch 1, bei der die Lamellenelemente (5, 6) in der axialen Richtung periodisch alternieren.

3. Spritzgussform nach Anspruch 1 oder 2, bei der zumindest die Hälfte der Lamellenelemente (5, 6) eines jeden der beiden Teilformeinsätze (1, 2) untereinander formidentisch sind.

4. Spritzgussform nach einem der vorstehenden Anspruche, bei der die Lamellenelemente (5, 6) jeweils zweifach alternieren.

5. Spritzgussform nach einem der vorstehenden Ansprüche, bei der sich die Lamellenelemente (5, 6) der beiden Teilformeinsätze (1, 2) paarweise flächig berühren.

6. Spritzgussform nach einem der vorstehenden Ansprüche, welche mindestens vier zusammengesetzte Teilformeinsätze (1, 2) aufweist, die jeweils einen in der axialen Richtung laufenden Träger (3, 4) und an dem Träger (3, 4) eine Mehrzahl Lamellenelemente (5, 6) aufweisen, wobei die Lamellenelemente (5, 6) jeweils zweier der Teilformeinsätze (1, 2) bei dem Zusammensetzen der Teilformeinsätze in der axialen Richtung aufeinander folgend angeordnet sind und die Lamellenelemente (5, 6) dabei in der axialen Richtung in Bezug auf die Zugehörigkeit zu den jeweils zwei Teilformeinsätzen alternieren.

7. Spritzgussform nach einem der vorstehenden Ansprüche, die so ausgelegt ist, dass die beiden Teilformeinsätze (1, 2), deren Lamellenelemente (5, 6) in der axialen Richtung aufeinander folgend angeordnet sind, beim Entformen aufeinander folgend angeordnet bleiben und die beiden Teitformeinsätze (1, 2) beim Entformen als Spritzgussformteil relativ zueinander in Ruhe und miteinander verbunden bleiben.

8. Spritzgussform nach einem der vorstehenden Ansprüche, bei dem die Lamellenelemente (5, 6) mit den Trägern (3, 4) der jeweiligen Teilformeinsätze (1, 2) einstückig ausgebildet sind.

9. Spritzgussform nach einem der vorstehenden Ansprüche, die ausgelegt ist zum Spritzgießen eines Applikators (7) für flüssiges, streichfähiges oder feinpartikelförmiges Material.

10. Spritzgussform nach einem der vorstehenden Ansprüche, die ausgelegt ist zum Spritzgießen einer Bürste (7).

11. Spritzgussform nach Anspruch 9 und 10, bei der das Spritzgussprodukt (7) ein Kosmetikbürstchen, insbesondere ein Wimperntuschebürstchen, ist.

12. Spritzgussform nach einem der vorstehenden Ansprüche, bei der die Zahl der Lamellenelemente (5, 6) zumindest zwanzig beträgt.

13. Spritzgussmaschine mit einer Spritzgussform nach einem der vorstehenden Ansprüche.

14. Verfahren zum Zusammenbauen einer Spritzgussform nach einem der Ansprüche 1 bis 12,
bei dem mindestens drei Teilformeinsätze (1, 2) zusammengesetzt werden,
wobei mindestens einer der Teilformeinsätze (1, 2) jeweils einen in einer axialen Richtung laufenden Träger (3, 4) und an dem Träger (3, 4) eine Mehrzahl Lamellenelemente (5, 6) aufweist,
die Lamellenelemente (5, 6) dieses Teilformeinsatzes (1, 2) und Lamellenelemente (6, 5) mindestens eines weiteren der Teiltformeinsätze (2, 1) bei dem Zusammensetzen der beiden Teilformeinsätze (1, 2) in der axialen Richtung aufeinander folgend angeordnet werden,
die Lamellenelemente (5, 6) dabei in solcher Weise zumindest einen Teil einer Negativform für das Spritzgussprodukt bilden, dass feine Strukturen der Negativform aus vor dem Zusammensetzen der Teilformeinsätze (1, 2) getrennten Teilen aufgebaut werden,
und die Lamellenelemente (5, 6) dabei in der axialen Richtung in Bezug auf die Zugehörigkeit zu den beiden Teilformeinsätzen (1, 2) alternieren,
**dadurch gekennzeichnet, dass** auch der mindestens eine der Teilformeinsätze (2, 1) einen in der axialen Richtung laufenden Träger (4, 3) und die Mehrzahl Lamellenelemente (6, 5) an dem Träger (4, 3) aufweist.

15. Verfahren zum Spritzgießen, bei dem eine Spritzgussform nach einem der Ansprüche 1 bis 12 vorbereitet und Spritzgussmasse in die Spritzgussform zur Herstellung eines Spritzgussprodukts (7) eingespritzt wird.

16. Verfahren nach Anspruch 15, bei dem die Spritzgussform vor dem Spritzgießen zusammengebaut wird, wobei die Teilformeinsätze (1, 2) zusammengesetzt werden.

## Claims

1. A mold for injection molding
comprising at least three assembled partial mold inserts (1, 2),
wherein at least one of said partial mold inserts (1, 2) has a respective carrier (3, 4) extended along an axial direction and a plurality of lamella elements (5, 6) on said carrier (3, 4),
said lamella elements (5, 6) of said partial mold inserts (1, 2) and lamella elements (6, 5) of at least one further of said partial mold insert (2, 1) are arranged successively in said axial direction when assembling said two partial mold inserts (1, 2),
said lamella elements (5, 6) form therein at least a part of a negative mold for the injection mold product such that fine structures of said negative mold are formed of parts separated before said assembling of said partial mold inserts (1,2),
and said lamella elements (5, 6) alternate in said axial direction in respect to their belonging to said two partial mold inserts (1, 2), therein,
**characterized in that** also said at least one further of said partial mold inserts (2, 1) has a carrier (4, 3) extended along said axial direction, and said plurality of lamella elements (6, 5) on said carrier (4, 3).

2. The mold for injection molding of claim 1 wherein said lamella elements (5, 6) alternate periodically in said axial direction.

3. The mold for injection molding of claim 1 or 2 wherein at least half of said lamella elements (5, 6) of each of said partial mold inserts (1, 2) are identical in form relative to each other.

4. The mold for injection molding of one of the preceding claims wherein said lamella elements (5, 6) alternate in a relationship of two.

5. The mold for injection molding of one of the preceding claims wherein said lamella elements (5, 6) of said partial mold inserts (1, 2) contact each other with surfaces thereof pairwise.

6. The mold for injection molding of one of the preceding claims comprising at least four assembled partial mold inserts (1, 2) respectively having a carrier (3, 4) extended along said axial direction and a plurality of lamella elements (5, 6) on said carrier (3, 4), wherein said lamella elements (5, 6) of respective two of said partial mold inserts (1, 2) are successively arranged in said axial direction in said assembling of said partial mold inserts and said lamella elements (5, 6) alternate in said axial direction with regard to their belonging to said respective two partial mold inserts, therein.

7. The mold for injection molding of one of the preceding claims being designed such that said two partial mold inserts (1, 2) the lamella elements (5, 6) of which are successively arranged in said axial direction, remain successively arranged during removal of the product from the mold and said two partial mold inserts (1, 2) remain fixed relative to each other and connected to each other as an injection mold part during removal of said product from said mold.

8. The mold for injection molding of one of the preceding claims wherein said lamella elements (5, 6) are integrally formed with said carriers (3, 4) of said corresponding partial mold inserts (1, 2).

9. The mold for injection molding of one of the preceding claims being designed for injection molding of an application device (7) for liquid or paintable material or material in fine particles.

10. The mold for injection molding of one of the preceding claims being designed for injection molding of a small brush (7).

11. The mold for injection molding of claim 9 and 10 wherein the injection molding product (7) is a cosmetic brush, in particular a mascara brush.

12. The mold for injection molding of one of the preceding claims wherein the number of lamella elements (5, 6) is at least twenty.

13. An injection molding machine comprising a mold for injection molding of one of the preceding claims.

14. A method for assembling a mold for injection molding of one of claims 1 to 12,
wherein at least three partial mold inserts (1, 2) are assembled,
wherein at least one of said partial mold inserts (1, 2) has a respective carrier (3, 4) extended along an axial direction and a plurality of lamella elements (5, 6) on said carrier (3, 4),
said lamella elements (5, 6) of said partial mold inserts (1, 2) and lamella elements (6, 5) of at least one further of said partial mold insert (2, 1) are arranged successively in said axial direction when assembling said two partial mold inserts (1, 2),
said lamella elements (5, 6) form therein at least a part of a negative mold for the injection mold product such that fine structures of said negative mold are formed of parts separated before said assembling of said partial mold inserts (1, 2),
and said lamella elements (5, 6) alternate in said axial direction in respect to their belonging to said two partial mold inserts (1, 2), therein,
**characterized in that** also said at least one further of said partial mold inserts (2, 1) has a carrier (4, 3) extended along said axial direction, and said plurality of lamella elements (6, 5) on said carrier (4, 3).

15. A method for injection molding wherein a mold for injection molding is prepared along one of claims 1 to 12 and injection molding material is injected into said mold for injection molding in order to produce an injection molding product (7).

16. The method of claim 15 in which said mold for injection molding is assembled before said injection molding wherein said partial mold inserts (1, 2) are assembled.

## Revendications

1. Moule à moulage par injection
présentant l'assemblage d'au moins trois inserts de moulage partiels (1, 2),
au moins un des inserts de moulage partiels (1, 2) présentant respectivement un support (3, 4) s'étendant dans une direction axiale et une pluralité d'éléments de lamelles (5, 6) agencés sur le support (3, 4),
les éléments de lamelles (5, 6) de cet insert de moulage partiel (1, 2) et les éléments de lamelles (6, 5) d'au moins un autre des inserts de moulage partiels (2, 1) étant agencés successivement dans la direction axiale lors de l'assemblage des deux inserts de moulage partiels (1, 2),
les éléments de lamelles (5, 6) formant alors au moins une partie d'un moule négatif pour le produit moulé par injection, de telle manière que des structures fines du moule négatif soient constituées par des parties séparées avant l'assemblage des inserts de moulage partiels (1, 2),
et les éléments de lamelles (5, 6) étant simultanément alternés dans la direction axiale relativement à leur appartenance aux deux inserts de moulage partiels (1, 2),
**caractérisé en ce que** l'au moins un autre des inserts de moulage partiels (2, 1) présente lui aussi un support (4, 3) s'étendant dans la direction axiale et la pluralité d'éléments de lamelles (6, 5) agencés sur le support (4, 3).

2. Moule à moulage par injection selon la revendication 1, dans lequel les éléments de lamelles (5, 6) sont alternés périodiquement dans la direction axiale.

3. Moule à moulage par injection selon la revendication 1 ou 2, dans lequel la moitié, au moins, des éléments de lamelles (5, 6) de chacun des deux inserts de moulage partiels (1, 2) sont de forme identique entre eux.

4. Moule à moulage par injection selon l'une des revendications précédentes, dans lequel les éléments de lamelles (5, 6) sont respectivement alternés l'un après l'autre.

5. Moule à moulage par injection selon l'une des revendications précédentes, dans lequel les éléments de lamelles (5, 6) des deux inserts de moulage partiels (1, 2) sont en contact de surface par paires.

6. Moule à moulage par injection selon l'une des revendications précédentes présentant l'assemblage d'au moins quatre inserts de moulage partiels (1, 2) présentant respectivement un support (3, 4) s'étendant dans la direction axiale et une pluralité d'éléments de lamelles (5, 6) agencés sur le support (3, 4), les éléments de lamelles (5, 6) des paires d'inserts de moulage partiels (1, 2) étant agencés successivement dans la direction axiale lors de l'assemblage des inserts de moulage partiels, ces éléments de lamelles (5, 6) étant ainsi alternés dans la direction axiale relativement à leur appartenance aux deux inserts de moulage partiels respectifs.

7. Moule à moulage par injection selon l'une des revendications précédentes, conçu de sorte que les deux inserts de moulage partiels (1, 2), dont les éléments de lamelles (5, 6) sont agencés de manière successive dans la direction axiale, conservent cet agencement successif lors du démoulage et que les deux inserts de moulage partiels (1, 2), lors du démoulage en tant que partie de moule à moulage par injection, restent au repos l'un par rapport à l'autre et reliés l'un à l'autre.

8. Moule à moulage par injection selon l'une des revendications précédentes, dans lequel les éléments de lamelles (5, 6) sont formés d'un seul tenant avec les supports (3, 4) des inserts de moulage partiels (1, 2) respectifs.

9. Moule à moulage par injection selon l'une des revendications précédentes, conçu pour le moulage par injection d'un applicateur (7) de produit fluide, de peinture ou à fines particules.

10. Moule à moulage par injection selon l'une des revendications précédentes, conçu pour le moulage par injection d'une brosse (7).

11. Moule à moulage par injection selon les revendications 9 et 10, dans lequel le produit moulé par injection (7) est une petite brosse pour produit cosmétique, notamment une brosse à mascara.

12. Moule à moulage par injection selon l'une des revendications précédentes, dans lequel les éléments de lamelles (5, 6) sont au nombre d'au moins vingt.

13. Machine de moulage par injection comportant un moule à moulage par injection selon l'une des revendications précédentes.

14. Procédé d'assemblage d'un moule à moulage par injection selon l'une des revendications 1 à 12,
dans lequel on assemble au moins trois inserts de moulage partiels (1, 2),
au moins un des inserts de moulage partiels (1, 2) présentant respectivement un support
(3, 4) s'étendant dans la direction axiale et une pluralité d'éléments de lamelles (5, 6) agencés sur le support (3, 4),
les éléments de lamelles (5, 6) de cet insert de moulage partiel (1, 2) et les éléments de lamelles (6, 5) d'au moins un autre des inserts de moulage partiels (2, 1) étant agencés successivement dans la direction axiale lors de l'assemblage des deux inserts de moulage partiels (1, 2),
les éléments de lamelles (5, 6) formant alors au moins une partie d'un moule négatif pour produit moulé par injection, de telle manière que des structures fines du moule négatif soient constituées par des parties séparées avant l'assemblage des inserts de moulage partiels (1, 2),
et les éléments de lamelles (5, 6) étant simultanément alternés dans la direction axiale relativement à leur appartenance aux deux inserts de moulage partiels (1, 2),
**caractérisé en ce que** l'au moins un autre des inserts de moulage partiels (2, 1) présente lui aussi un support (4, 3) s'étendant dans la direction axiale et la pluralité d'éléments de lamelles (6, 5) agencés sur le support (4, 3).

15. Procédé de moulage par injection, dans lequel on prépare un moule à moulage par injection selon l'une des revendications 1 à 12 et on injecte une matière d'injection dans le moule à moulage par injection pour fabriquer un produit moulé par injection (7).

16. Procédé selon la revendication 15, dans lequel le montage du moule à moulage par injection s'effectue préalablement au moulage par injection par assemblage des inserts de moulage partiels (1, 2).
